# FASCICULE DE BREVET EUROPEEN

(11) **EP 0 801 887 B1**
(45) Date de publication et mention de la délivrance du brevet: **27.06.2001**
(21) Numéro de dépôt: 97440029.3
(22) Date de dépôt: 03.04.1997
(51) Int. Cl.: A01D 34/66

(54) **Faucheuse**
Mähmaschine
Cutting machine

(30) Priorité: 17.04.1996 FR 9605051
(43) Date de publication de la demande: 22.10.1997
(73) Titulaire: KUHN S.A., 67700 Saverne (FR)
(72) Inventeur: Haberkorn, Jean-Paul, 67700 Monswiller (FR); Fritsch, Jean-Pierre, 67310 Hohengoeft (FR)

(56) Documents cités:
- EP-A- 0 556 143
- DE-A- 4 110 430
- DE-U- 9 112 331
- FR-A- 2 675 980
- NL-A- 6 918 351
- NL-A- 9 202 216
- US-A- 3 593 504

## Description

La présente invention se rapporte à une faucheuse comportant :
- un mécanisme de coupe s'étendant :
   - en position de travail, transversalement à la direction d'avance et au niveau du sol, et
   - en position andain, transversalement à ladite direction d'avance et à une certaine distance au-dessus du sol.
- une structure d'attelage destinée à être liée au dispositif d'attelage d'un véhicule moteur ;
- une poutre porteuse liée d'une part à la structure d'attelage au moyen d'une première articulation et d'autre part au mécanisme de coupe au moyen d'une deuxième articulation ;
- un dispositif de manoeuvre permettant d'amener le mécanisme de coupe au moins en position de travail et en position andain et comportant :
   - un organe de manoeuvre lié entre autres au mécanisme de coupe et comprenant un premier levier lié audit mécanisme de coupe au moyen d'une troisième articulation et un verrou destiné à stopper lors de la mise en position andain, le pivotement du mécanisme de coupe, vers le haut, autour de l'axe longitudinal de la deuxième articulation ; et
   - un élément de manoeuvre lié à l'une de ses extrémités audit organe de manoeuvre au moyen d'une quatrième articulation et, à l'autre de ses extrémités à la structure d'attelage au moyen d'une cinquième articulation.

Il est connu dans l'état de la technique une telle faucheuse (FR-A-2 675 980).

Cette faucheuse comporte un mécanisme de coupe, une structure d'attelage, une poutre porteuse liée d'une part à ladite structure d'attelage au moyen d'une première articulation et d'autre part audit mécanisme de coupe au moyen d'une deuxième articulation et un dispositif de manoeuvre permettant d'amener ledit mécanisme de coupe en position de travail, en position andain et en position de transport, et un dispositif d'allégement du mécanisme de coupe comportant un ressort lié d'une part à la structure d'attelage et d'autre part audit mécanisme de coupe.

Le dispositif de manoeuvre comporte un levier lié d'une part au mécanisme de coupe au moyen d'une troisième articulation et d'autre part à l'une des extrémités d'un vérin au moyen d'une quatrième articulation. Le vérin est lié à l'autre de ses extrémités à la structure d'attelage au moyen d'une cinquième articulation.

Le dispositif de manoeuvre comporte en sus un verrou destiné à stopper, lors de la mise en position andain, le pivotement du mécanisme de coupe, vers le haut, autour de l'axe longitudinal de la deuxième articulation, ledit verrou étant lié au levier au moyen d'une articulation supplémentaire. A cet effet, lors de la mise en position andain, le verrou vient en appui sur une butée prévue sur la poutre porteuse de manière à condamner le pivotement du mécanisme de coupe.

Lors du travail, le mécanisme de coupe peut s'adapter à la configuration du terrain en pivotant librement autour de la première et de la deuxième articulation.

En bout de parcelle, l'opérateur actionne le vérin lequel fait pivoter le levier autour de l'axe longitudinal de la troisième articulation jusqu'à ce que celui-ci bute contre un carter de renvoi appartenant au mécanisme de coupe, à ce moment là, le mécanisme de coupe pivote autour de l'axe longitudinal de la deuxième articulation jusqu'à ce que le verrou vient en appui sur la butée prévue sur la poutre porteuse.

Dès que le verrou est en appui sur la butée, le mécanisme de coupe et la poutre porteuse pivotent autour de l'axe longitudinal de la première articulation jusqu'au moment ou l'opérateur cesse d'actionner le vérin ou qu'un limiteur stoppe le débattement de la poutre porteuse.

Dans cette position andain, la faucheuse s'étend au-dessus du produit coupé ou à couper, ce qui permet de faire les manoeuvres nécessaires en bout de parcelle pour poursuivre la suite des opérations.

Pour remettre la faucheuse en position de travail, l'opérateur actionne de nouveau le vérin de manière que la faucheuse revienne dans sa position de travail.

Pour mettre la faucheuse en position de transport, l'opérateur escamote le verrou de manière à ne plus limiter le pivotement du mécanisme de coupe autour de l'axe longitudinal de la deuxième articulation, afin de pouvoir pivoter le mécanisme de coupe dans une position de transport dans laquelle il s'étend sensiblement verticalement.

Cependant, cette faucheuse connue présente un certain nombre d'inconvénients.

Un premier inconvénient réside dans le fait que pour obtenir une bonne adaptation du mécanisme de coupe à la configuration du terrain, ce qui se traduit notamment par un grand angle de pivotement dudit mécanisme de coupe autour de l'axe longitudinal de la deuxième articulation, il faut faire appel à un vérin ayant une grande course ce qui revient assez cher et augmente la durée de manoeuvre du mécanisme de coupe.

Un deuxième inconvénient réside dans le fait que dans une position de travail particulière, lorsque le mécanisme de coupe est pivoté vers le bas autour de l'axe longitudinal de la deuxième articulation comme cela est souvent le cas lorsque l'on fauche les produits d'un flanc de fossé, il est impossible à l'opérateur de mettre la faucheuse dans sa position andain et de transport. En effet, lorsque l'opérateur actionne le vérin celui-ci fait, en fonction de la répartition des masses et des différents bras de levier qui s'appliquent sur le mécanisme de coupe et la poutre porteuse, uniquement pivoter la poutre porteuse vers le haut autour de l'axe longitudinal de la première articulation alors que sous l'effet de son poids, le mécanisme de coupe pivote de plus en plus vers le bas autour de l'axe longitudinal de la deuxième articulation.

Un inconvénient supplémentaire de cette faucheuse réside dans le fait que les efforts dans le levier sont relativement importants, ce qui nécessite des pièces de masse relativement importante et qui se traduit par des coûts élevés.

Le but de la présente invention est de remédier aux inconvénients de la faucheuse de l'art antérieur tout en ayant une bonne mise en position andain du mécanisme de coupe.

A cet effet, la faucheuse selon l'invention est caractérisée en ce que l'organe de manoeuvre comporte en sus un deuxième levier lié d'une part à la poutre porteuse au moyen d'une sixième articulation et d'autre part au premier levier au moyen d'une septième articulation.

Une telle faucheuse permet de commander efficacement et rapidement le mécanisme de coupe dans les différentes positions au moyen d'un élément de manoeuvre bénéficiant d'une course relativement faible. En outre, les différentes pièces auxquelles l'on fait appel sont soumises à des contraintes moins sévères, ce qui permet de fiabiliser davantage la faucheuse et de la réaliser avec un budget moindre.

L'invention concerne également une telle faucheuse comprenant les caractéristiques suivantes:
- lesdites articulations présentent un axe respectif dirigé vers l'avant de préférence sensiblement suivant la direction d'avance au travail ;
- en position de travail normal (mécanisme de coupe au moins sensiblement horizontal), la septième articulation liant le deuxième levier au premier levier est située plus haut que la deuxième articulation liant la poutre porteuse au mécanisme de coupe de manière à pivoter le mécanisme de coupe vers le haut lors de l'actionnement de l'élément de manoeuvre ;
- en position de travail normal et en vue suivant l'axe longitudinal de la deuxième articulation liant la poutre porteuse au mécanisme de coupe, la septième articulation liant le deuxième levier au premier levier est située entre ladite deuxième articulation et la troisième articulation liant le premier levier au mécanisme de coupe ;
- en vue suivant l'axe longitudinal de la deuxième articulation liant la poutre porteuse au mécanisme de coupe, la septième articulation liant le deuxième levier au premier levier est sensiblement confondu avec la quatrième articulation liant l'élément de manoeuvre à l'organe de manoeuvre ;
- la troisième articulation liant le premier levier au mécanisme de coupe est située au-dessus du plan horizontal contenant l'axe longitudinal de la deuxième articulation liant la poutre porteuse au mécanisme de coupe, tandis que la sixième articulation liant le deuxième levier à la poutre porteuse est située en dessous dudit plan horizontal ;
- la sixième articulation liant le deuxième levier à la poutre porteuse est située du même côté du plan vertical contenant l'axe longitudinal de la deuxième articulation liant la poutre porteuse au mécanisme de coupe que la structure d'attelage, tandis que la troisième articulation liant le premier levier au mécanisme de coupe est située de l'autre côté dudit plan vertical ;
- le verrou est destiné à venir en appui sur une butée prévue sur la poutre porteuse de manière à stopper à un moment donné le pivotement du mécanisme de coupe, vers le haut, autour de l'axe longitudinal de la deuxième articulation ;
- en position de travail normal le verrou est en contact avec la butée ou s'étend du moins dans le voisinage de celle-ci de manière à stopper immédiatement ou presque aussitôt le pivotement du mécanisme de coupe, vers le haut, autour de l'axe longitudinal de la deuxième articulation dès que l'élément de manoeuvre est commandé.
- le mécanisme de coupe est, en vue du transport, pivoté vers le haut autour de l'axe longitudinal de la deuxième articulation jusque dans une position sensiblement verticale ou au-delà, le verrou et/ou la butée sont escamotables pour autoriser ledit pivotement ;
- le verrou est prévu escamotable, et la neutralisation de celui-ci est réalisable à l'aide d'un dispositif de commande à distance ;
- le verrou est constitué par un troisième levier lié au deuxième levier au moyen d'une huitième articulation ;
- la huitième articulation liant le troisième levier au deuxième levier présente un axe dirigé vers l'avant, de préférence sensiblement suivant la direction d'avance au travail ;
- il est prévu un moyen permettant, en position de travail, au mécanisme de coupe de se déplacer librement autour de l'axe longitudinal de la deuxième articulation liant la poutre porteuse audit mécanisme de coupe de manière à favoriser davantage l'adaptation du mécanisme de coupe à la configuration du terrain ;
- le moyen est constitué d'un trou oblong réalisé longitudinalement dans le premier levier et dans lequel peut coulisser librement la quatrième articulation liant l'élément de manoeuvre audit premier levier ;
- en position de travail, l'élément de manoeuvre permet à l'organe de manoeuvre de se déplacer librement pour suivre les déplacements du mécanisme de coupe.

D'autres objets et caractéristiques ressortiront de la description ci-après avec référence aux dessins annexés qui représentent, à titres d'exemples non limitatifs, une forme de réalisation de la faucheuse selon l'invention.

Sur ces dessins:
- la figure 1 représente, en position de travail normal, une faucheuse selon l'invention vue de l'arrière et liée à un véhicule moteur ;
- la figure 2 représente la faucheuse de la figure 1, vue de dessus ;
- la figure 3 représente, en position de travail extrême basse, la faucheuse de la figure 1, vue de l'arrière ;
- la figure 4 représente, dans une position de travail particulière (mécanisme de coupe pivoté vers le haut autour de la deuxième articulation), la faucheuse de la figure 1, vue de l'arrière;
- la figure 5 représente, en position andain, la faucheuse de la figure 1, vue de l'arrière ;
- la figure 6 représente, en position de transport, la faucheuse de la figure 1, vue de l'arrière ;
- la figure 7 représente un agrandissement partiel de la faucheuse de la figure 1.

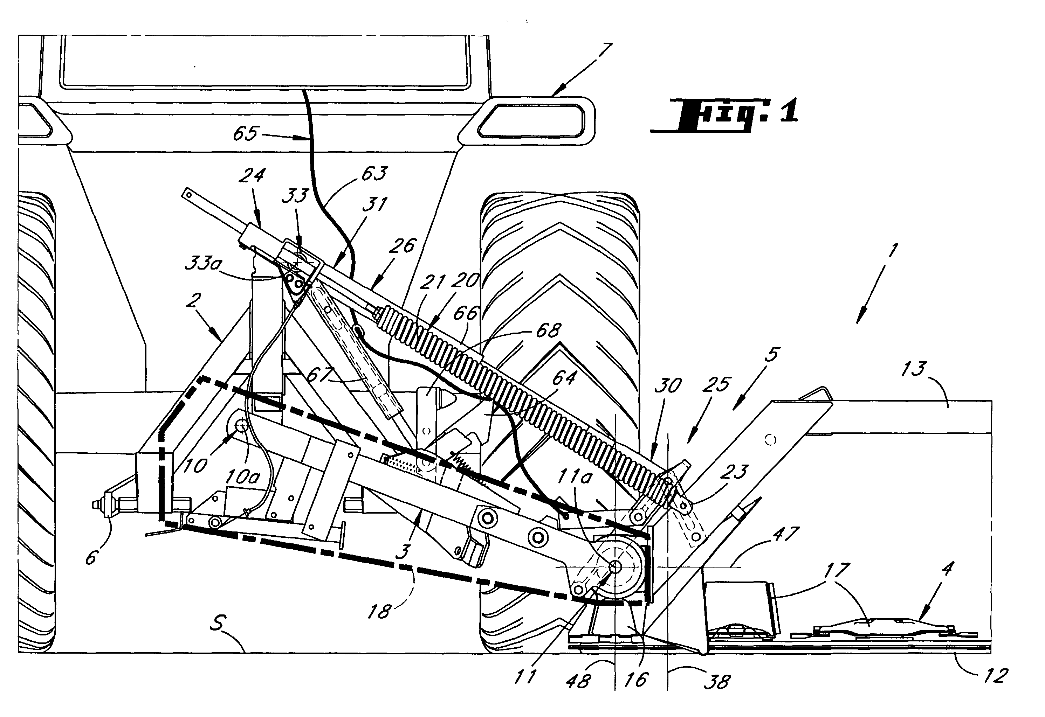

La faucheuse (1) représentée sur les figures 1 à 6 est semblable à celle décrite par le document FR-A-2 675 980. Pour de plus amples détails, on se reportera, en cas de besoin, au texte dudit document.

La faucheuse (1) se compose, dans les grandes lignes, d'une structure d'attelage (2), d'une poutre porteuse (3), d'un mécanisme de coupe (4) et d'un dispositif de manoeuvre (5).

La structure d'attelage (2) est liée à un dispositif d'attelage (6) d'un véhicule moteur (7). La poutre porteuse (3), quant à elle, s'étend, lors du travail, transversalement à la direction d'avance (9) et vers le bas en direction du mécanisme de coupe (4).

A l'une de ses extrémités longitudinales, la poutre porteuse (3) est liée à la structure d'attelage (2) au moyen d'une première articulation (10) d'axe longitudinal (10a) au moins sensiblement horizontal et dirigé suivant la direction d'avance (9). A l'autre extrémité longitudinale, la poutre porteuse (3) est liée au mécanisme de coupe (4) au moyen d'une deuxième articulation (11) d'axe longitudinal (11a) au moins sensiblement parallèle à l'axe longitudinal (10a) de la première articulation (10).

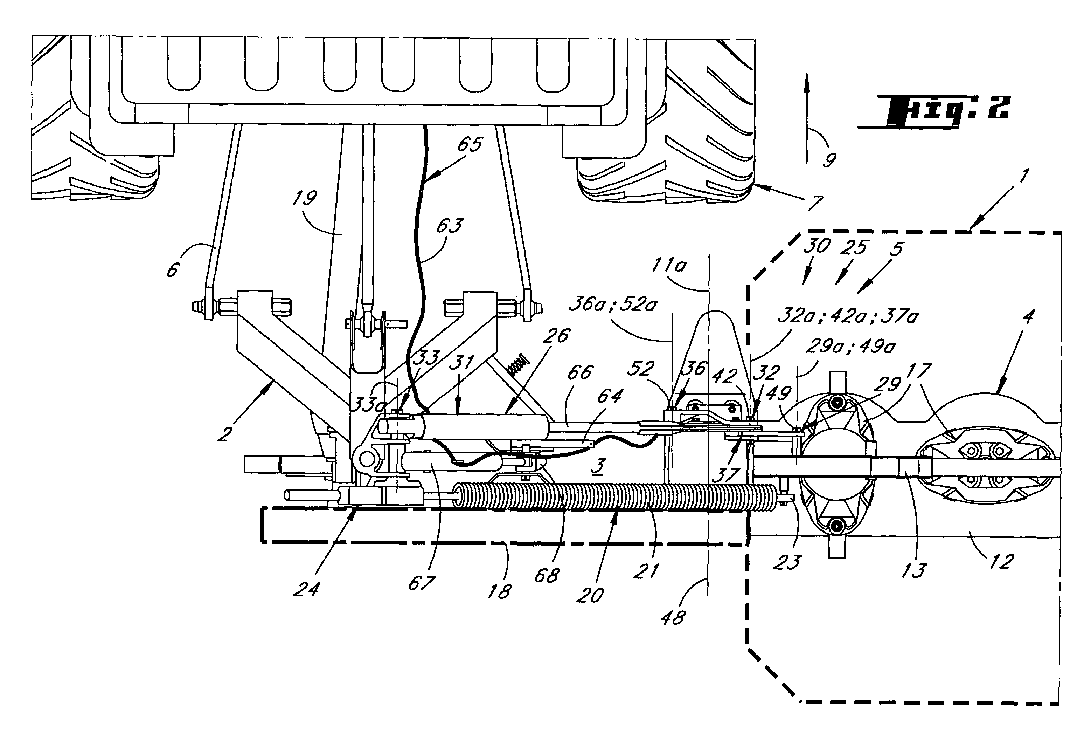

Le mécanisme de coupe (4) comporte dans les grandes lignes une barre de coupe (12) surmontée d'une structure porteuse (13) destinée notamment à supporter des organes de protection (représentés en traits interrompus sur la figure 2). Cette structure porteuse (13) est fixée à la barre de coupe (12) au moyen d'un carter de renvoi (16). Ce carter de renvoi (16) lie d'une part le mécanisme de coupe (4) à la structure porteuse (13) et contient d'autre part une partie des organes d'entraînement destinés à entraîner des éléments de coupe (17) de la barre de coupe (12).

A l'arrière de la poutre porteuse (3) s'étend un dispositif de transmission (18) (représenté schématiquement en traits mixtes) lequel est destiné à être entraîné au moyen d'un arbre de transmission (19) à joints universels lié à la prise de puissance (non représentée) du véhicule moteur (7). Ce dispositif de transmission (18) est destiné à entraîner les organes d'entraînement du carter de renvoi (16).

Il est également prévu un dispositif d'allégement (20) comportant un ressort de traction (21) lié d'une part à une de ses extrémités à un tirant inférieur (23) lui-même lié à la structure porteuse (13) du mécanisme de coupe (4) et d'autre part, à l'autre extrémité, à un dispositif de commande (24) connu par l'homme de l'art.

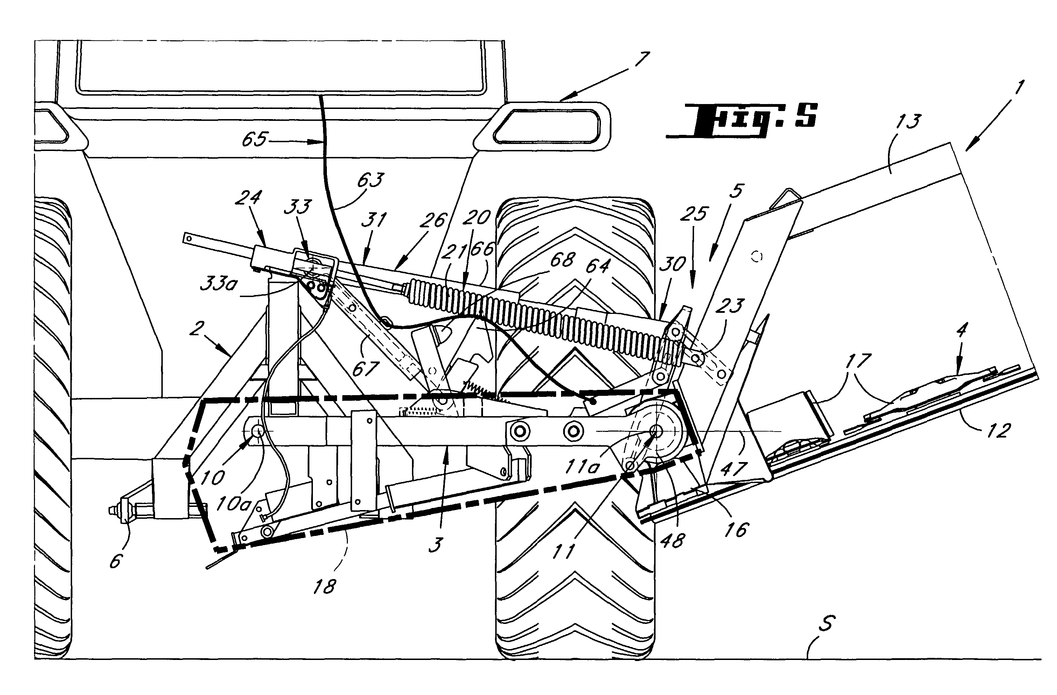

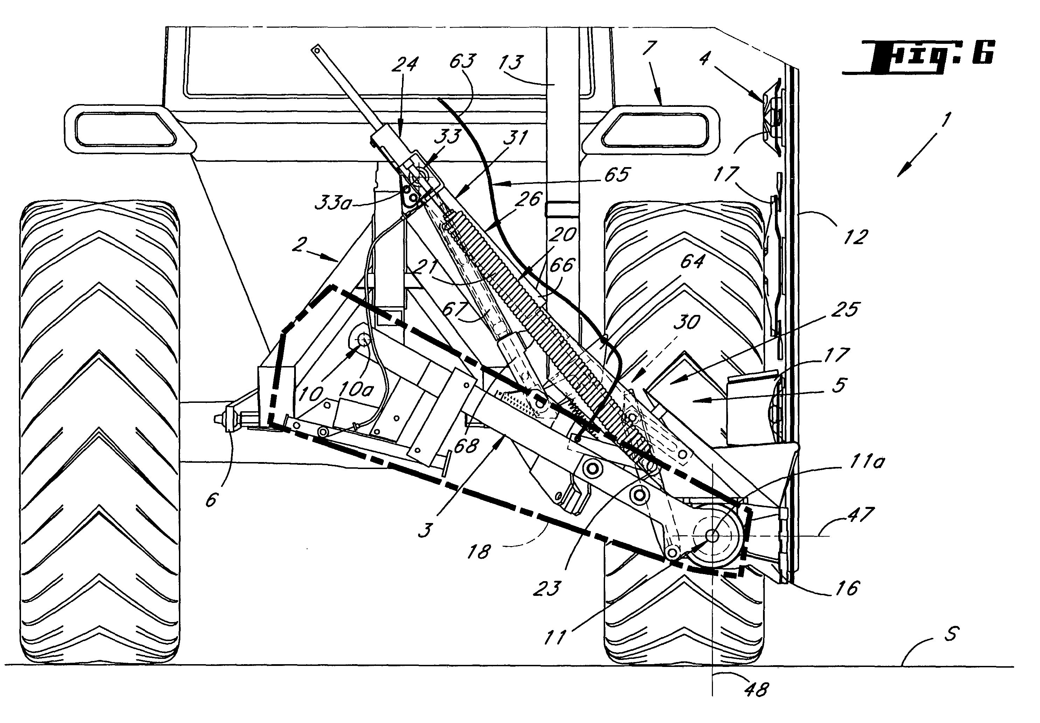

Le dispositif de manoeuvre (5) permet d'amener le mécanisme de coupe (4) en position de transport (figure 6), en position de travail (figures 1 à 4) et en position andain (figure 5).

A cet effet, le dispositif de manoeuvre (5) comporte un organe de manoeuvre (25) et un élément de manoeuvre (26). L'organe de manoeuvre (25) comporte un premier levier (27) lié à la structure porteuse (13) du mécanisme de coupe (4) au moyen d'une troisième articulation (29) d'axe longitudinal (29a) au moins sensiblement parallèle à l'axe longitudinal (11a) de la deuxième articulation (11). L'élément de manoeuvre (26) est lié à l'une (30) de ses extrémités (30, 31) à l'organe de manoeuvre (25) au moyen d'une quatrième articulation (32) d'axe longitudinal (32a) au moins sensiblement parallèle à l'axe longitudinal (11a) de la deuxième articulation (11) et à l'autre de ses extrémités (30, 31) à la structure d'attelage (2) au moyen d'une cinquième articulation (33) d'axe longitudinal (33a) au moins sensiblement parallèle audit axe longitudinal (32a).

On remarquera que l'organe de manoeuvre (25) comporte en sus un deuxième levier (35) lié d'une part à la poutre porteuse (3) au moyen d'une sixième articulation (36) d'axe longitudinal (36a) et d'autre part au premier levier (27) au moyen d'une septième articulation (37) d'axe longitudinal (37a), lesdits axes longitudinaux (36a, 37a) étant au moins sensiblement parallèle à l'axe longitudinal (11a) de la deuxième articulation (11).

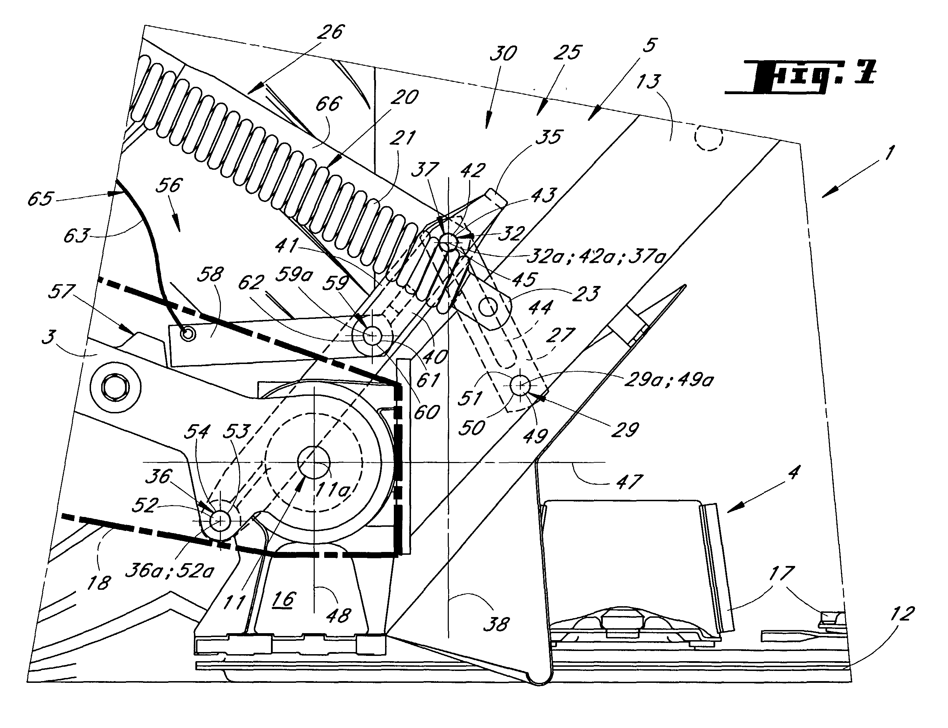

A la lumière des figures 1, 2 et 7, on voit que le premier levier (27) et le deuxième levier (35) s'étendent transversalement à la direction d'avance (9) et convergent vers le haut de manière que, en position de travail normal, lorsque le mécanisme de coupe (4) s'étend au moins sensiblement horizontalement, ledit premier levier (27) s'étend vers le haut dans la direction de la structure d'attelage (2) et que le deuxième levier (35) s'étend vers le haut dans la direction opposée à celle de ladite structure d'attelage (2). En position de travail normal, la septième articulation (37) liant le deuxième levier (35) au premier levier (27) est située d'une part plus haut que la deuxième articulation (11) liant la poutre porteuse (3) au mécanisme de coupe (4) et d'autre part, en vue suivant l'axe longitudinal (11a) de ladite deuxième articulation (11), dans un plan vertical (38) dirigé suivant la direction d'avance (9) et implanté entre ladite deuxième articulation (11) et la troisième articulation (29) liant le premier levier (27) à la structure porteuse (13) du mécanisme de coupe (4). On remarquera que l'axe longitudinal (37a) de la septième articulation (37) est sensiblement confondu avec l'axe longitudinal (32a) de la quatrième articulation (32). A cet effet, selon l'exemple représenté, le deuxième levier (35) comporte, aux alentours de la septième articulation (37), deux ailes (40, 41) entre lesquelles s'étendent le premier levier (27) et l'extrémité (30) de l'élément de manoeuvre (26). Un tourillon (42) d'axe longitudinal (42a), confondu avec les axes longitudinaux (32a, 37a) de la quatrième et de la septième articulation (32, 37), s'étend de part en part au travers des deux ailes (40, 41) du deuxième levier (35), le premier levier (27) et l'extrémité (30) de l'élément de manoeuvre (26) au moyen, respectivement, d'un premier trou (43), d'un trou oblong (44) et d'un deuxième trou (45). Ce trou oblong (44) est réalisé longitudinalement dans le premier levier (27) dans lequel peut coulisser librement la quatrième articulation (32) liant l'élément de manoeuvre (26) audit premier levier (27), respectivement le tourillon (42). La quatrième articulation (32), respectivement le tourillon (42), pouvant coulisser librement dans le trou oblong (44) constitue un moyen permettant, en position de travail, au mécanisme de coupe (4) de se déplacer librement autour de l'axe longitudinal (11a) de la deuxième articulation (11) de manière à favoriser l'adaptation dudit mécanisme de coupe (4) à la configuration du terrain.

En position de travail normal, la troisième articulation (29) liant le premier levier (27) au mécanisme de coupe (4) est située d'une part au-dessus du plan horizontal (47) contenant l'axe longitudinal (11a) de la deuxième articulation (11) et d'autre part de l'autre côté d'un deuxième plan vertical (48) contenant l'axe longitudinal (11a) de ladite deuxième articulation (11) de la structure d'attelage (2). Plus précisément, en position de travail normal, la troisième articulation (29) est située de l'autre côté du premier plan vertical (38) de la structure d'attelage (2) et au moins sensiblement à une même distance dudit premier plan vertical (38) que du plan horizontal (47). Selon l'exemple représenté, la troisième articulation (29) comporte également un tourillon (49) d'axe longitudinal (49a) confondu avec l'axe longitudinal (29a) de ladite troisième articulation (29), ledit tourillon (49) s'étendant d'une part au travers d'un troisième trou (50) prévu dans la structure porteuse (13) et d'autre part au travers d'un quatrième trou (51) prévu à l'extrémité du premier levier (27).

En position de travail normal, la sixième articulation (36) liant le deuxième levier (35) à la poutre porteuse (3) est située d'une part en dessous dudit plan horizontal (47) et d'autre part du même côté du deuxième plan vertical (48) que la structure d'attelage (2). Plus précisément, la sixième articulation (36) est située au moins sensiblement à une même distance du deuxième plan vertical (48) que du plan horizontal (47). Selon l'exemple représenté, la sixième articulation (36) comporte un tourillon (52) d'axe longitudinal (52a) confondu avec l'axe longitudinal (36a) de ladite sixième articulation (36). Le tourillon (52) s'étend d'une part au travers d'un cinquième trou (53) prévu dans la poutre porteuse (3) et d'autre part au travers d'un sixième trou (54) prévu à l'extrémité du deuxième levier (35).

On remarquera encore que, en position de travail normal, la distance qui sépare la troisième articulation (29) de la deuxième articulation (11) est plus grande que la distance qui sépare la sixième articulation (36) de ladite deuxième articulation (11).

A la lumière des différentes figures, on voit également qu'il est prévu un verrou (56) destiné à stopper, lors de la mise en position andain, le pivotement du mécanisme de coupe (4), vers le haut, autour de l'axe longitudinal (11a) de la deuxième articulation (11). Le verrou (56) est destiné à venir en appui sur une butée (57) prévue sur la poutre porteuse (3). A cet effet, le verrou (56) est constitué d'un troisième levier (58) lié au deuxième levier (35) au moyen d'une huitième articulation (59) d'axe longitudinal (59a) au moins sensiblement parallèle à l'axe longitudinal (1 la) de la deuxième articulation (11).

Cette huitième articulation (59) comporte un tourillon (60) d'axe longitudinal (60a) confondu avec l'axe longitudinal (59a) de ladite huitième articulation (59). Ce tourillon (60) s'étend de part en part au travers des deux ailes (40, 41) du deuxième levier (35) au moyen d'un septième trou (61) et au travers d'un huitième trou (62) prévu à l'extrémité du troisième levier (58). Selon l'exemple représenté, la huitième articulation (59) est située entre la sixième articulation (36) et la septième articulation (37). Plus précisément, ladite huitième articulation (59) est située en position de travail normal et vue suivant la direction d'avance (9), d'une part sensiblement à mi-distance entre le premier plan vertical (38) et le deuxième plan vertical (48), et d'autre part sensiblement à la même hauteur que la butée (57), de manière que le troisième levier (58) s'étend sensiblement horizontalement. Dans cette position de travail normal, le troisième levier (58) du verrou (56) s'étend dans le proche voisinage de la butée (57).

A l'extrémité opposée de la huitième articulation (59), le troisième levier (58) est lié à une ficelle (63), laquelle est également liée à un loquet (64) destiné à s'accrocher, en position de transport, à la structure porteuse (13) du mécanisme de coupe (4).

Cette ficelle (63) est destinée à être actionnée à partir du véhicule moteur (7) pour faire pivoter d'une part ledit troisième levier (58) vers le haut autour de l'axe longitudinal (59a) de la huitième articulation (59) en vue de neutraliser le verrou (56), et d'autre part pour faire pivoter le loquet (64) en position déverrouillée. Cette ficelle (63) formant un dispositif de commande à distance (65).

En position de travail normal, le mécanisme de coupe (4) repose sur le sol (S) sensiblement horizontalement, s'étend transversalement à la direction d'avance (9), et est allégé par le dispositif d'allégement (20). Lors du travail, la faucheuse est mue dans la parcelle à faucher. Pour une adaptation optimale du mécanisme de coupe (4) au relief du sol, celui-ci peut pivoter autour de l'axe longitudinal (10a) de la première articulation (10) liant la poutre porteuse (3) à la structure d'attelage (2) et autour de l'axe longitudinal (11a) de la deuxième articulation (11). A cet effet, l'élément de manoeuvre (26) du dispositif de manoeuvre (5) est constitué, selon l'exemple représenté, d'un vérin hydraulique (66) simple effet en communication avec le circuit hydraulique (non représenté) du véhicule moteur (7), à partir duquel il peut être commandé. Lors du travail, le circuit hydraulique (non représenté) du véhicule moteur (7) est dans une configuration telle que le vérin hydraulique (66) peut se déplacer librement pour suivre les déplacements du mécanisme de coupe (4). De cette manière, le mécanisme de coupe (4) peut aisément pivoter vers le bas autour de l'axe longitudinal (11a) de la deuxième articulation (11) ce qui a pour effet d'allonger le vérin hydraulique (66) et peut aisément pivoter vers le haut autour dudit axe longitudinal (11a). Lorsque le mécanisme de coupe (4) pivote vers le haut autour de l'axe longitudinal (11a), le vérin hydraulique (66) reste sensiblement immobile et la quatrième articulation (32) liant l'élément de manoeuvre (26) au premier levier (27), respectivement le tourillon (42), coulisse dans le trou oblong (44) dudit premier levier (27).

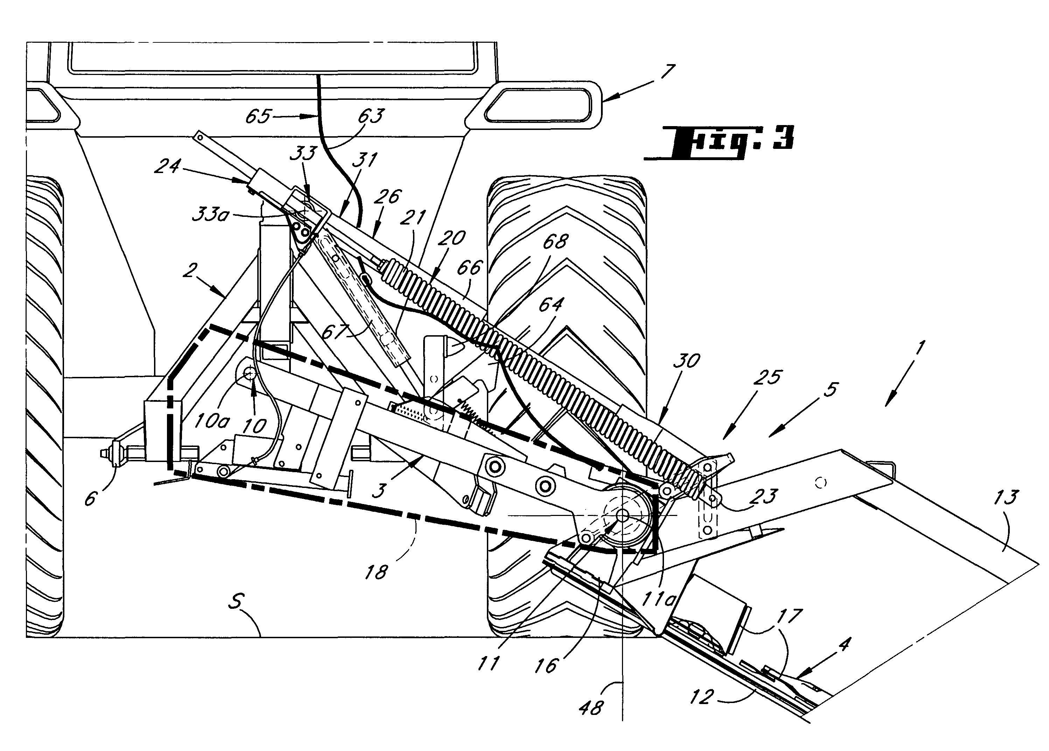

Dans la position de travail extrême basse du mécanisme de coupe (4) (figure 3), celui-ci s'étend vers le bas et le vérin hydraulique (66) est allongé au maximum, le tourillon (42) s'étend à l'extrémité du trou oblong (44) la plus éloignée de la troisième articulation (29) et le troisième levier (58) est largement décollé de la butée (57).

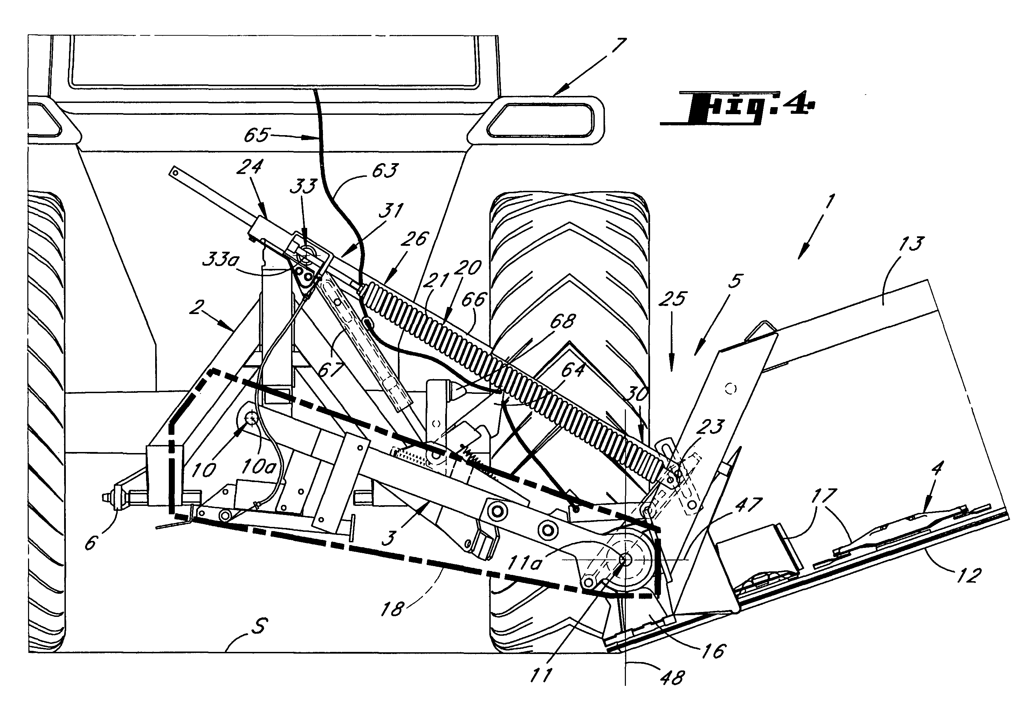

Dans la position de travail particulière du mécanisme de coupe (4) (figure 4), celui-ci s'étend vers le haut, le vérin hydraulique (66) est dans une position intermédiaire, le tourillon (42) s'étend entre les extrémités du trou oblong (44) et le troisième levier (58) est en appui sur la butée (57).

On remarquera que dans une position de travail normal intermédiaire, lorsque le mécanisme de coupe (4) a pivoté une première fois vers le bas de manière à allonger le vérin hydraulique (66) et ensuite quelque peu vers le haut autour de l'axe longitudinal (11a) de la deuxième articulation (11), le tourillon (42) s'étend entre les deux extrémités du trou oblong (44) ce qui permet avantageusement au mécanisme de coupe (4) de pivoter par la suite aisément vers le bas et vers le haut autour dudit axe longitudinal (11a) dans les limites autorisées par ledit trou oblong (44) sans avoir à déplacer ledit vérin hydraulique (66).

Le pivotement de la poutre porteuse (3) autour de l'axe longitudinal (10a) de la première articulation (10) est limité par un limiteur (67) connu par l'homme de l'art. Ce limiteur (67) comporte un verrou secondaire (68) destiné à verrouiller le pivotement relatif de la poutre porteuse (3) par rapport à la structure d'attelage (2) autour dudit axe longitudinal (10a).

Lorsque l'opérateur souhaite mettre la faucheuse (1) de la position de travail dans la position andain, il commande, à partir du véhicule moteur (7), le vérin hydraulique (66) lequel se raccourci et fait pivoter le deuxième levier (35) autour de l'axe longitudinal (36a) de la sixième articulation (36). Le tourillon (42) se déplace dans le trou oblong (44) jusqu'à ce qu'il s'étende à l'extrémité de celui-ci la plus éloigné de la troisième articulation (29). A ce moment là, le vérin hydraulique (66) étant toujours en train de se raccourcir, le mécanisme de coupe (4) pivote vers le haut autour de l'axe longitudinal (11a) de la deuxième articulation (11) jusqu'au moment où le troisième levier (58) du verrou (56) vienne en appui sur la butée (57), dès cet instant, le mécanisme de coupe (4) et la poutre porteuse (3) pivotent autour de l'axe longitudinal (10a) de la première articulation (10) jusqu'à ce que le vérin hydraulique (66) est raccourci au maximum. Dans cette position andain (figure 4) la poutre porteuse (3) s'étend sensiblement horizontalement et le mécanisme de coupe (4) s'étend vers le haut.

Pour remettre la faucheuse (1) dans la position de travail, il suffit à l'opérateur de commander le vérin hydraulique (66) de manière qu'il puisse s'allonger ce qui permet à la poutre porteuse (3) et au mécanisme de coupe (4) de revenir dans leur position de travail sous l'action de leur propre poids.

On remarquera que la mise en position andain de la faucheuse (1) se fait uniquement au moyen du vérin hydraulique (66), ce qui permet avantageusement de conserver la position de la structure d'attelage (2) par rapport au véhicule moteur (7) et donc de faire travailler l'arbre de transmission (19) à joints universels lié audit véhicule moteur (7) et entraînant le dispositif de transmission (18) dans les conditions optimales.

Lorsque l'opérateur souhaite mettre la faucheuse (1) de la position de travail dans la position de transport, il lève tout d'abord la structure d'attelage (2) au moyen du dispositif d'attelage (6) du véhicule moteur (7), le mécanisme de coupe (4) reste en contact avec le sol et la poutre porteuse (3) pivote vers le bas autour de l'axe longitudinal (10a) de la première articulation (10). A cet effet, le limiteur (67) s'allonge de manière à autoriser la mise en place du verrou secondaire (68) pour condamner les mouvements dudit limiteur (67). Lorsque le limiteur (67) s'est allongé au maximum, la partie du mécanisme de coupe (4) la plus proche de la structure d'attelage (2) est soulevée ce qui fait pivoter le mécanisme de coupe (4) vers le bas autour de l'axe longitudinal (11a) de la deuxième articulation (11), ce qui a pour effet de décoller le troisième levier (58) de la butée (57) ou de le décoller davantage de ladite butée (57). Ensuite, l'opérateur agit sur la ficelle (63) du dispositif de commande à distance (65), ce qui fait pivoter d'une part le loquet (64) en position déverrouillée et d'autre part le troisième levier (58) vers le haut pour neutraliser le verrou (56). Ce faisant, le loquet (64) entraîne le verrou secondaire (68) dans sa position verrouillée. Tout en maintenant l'action sur la ficelle (63), l'opérateur commande en sus le vérin hydraulique (66) lequel se raccourci et fait pivoter le mécanisme de coupe (4) vers le haut autour de l'axe longitudinal (11a) de la deuxième articulation (11) au moyen de l'organe de manoeuvre (25) jusque dans une position sensiblement verticale.

Dès que le mécanisme de coupe (4) est dans sa position de transport, l'opérateur cesse de commander le vérin hydraulique (66) et supprime l'action sur la ficelle (63) pour permettre au loquet (64) de s'accrocher à la structure porteuse (13) du mécanisme de coupe (4). La faucheuse (1) est en position de transport.

Pour mettre la faucheuse (1) de la position de transport dans la position de travail, l'opérateur effectuera les différentes opérations en sens inverse.

On notera toutefois, que en position de transport, le deuxième levier (35) s'étend vers le haut dans la direction de la structure d'attelage (2), et la troisième articulation (29), la quatrième articulation (32), la septième articulation (37), et la huitième articulation (59) sont situées du même côté du deuxième plan vertical (48) que la structure d'attelage (2).

Finalement, différentes modifications restent possibles, notamment en ce qui concerne la constitution des divers éléments ou par substitution d'équivalents techniques, sans pour autant sortir du domaine de protection défini par les revendications.

## Revendications

1. Faucheuse comportant:
- un mécanisme de coupe (4) s'étendant :
• en position de travail, transversalement à la direction d'avance (9) et au niveau du sol (S), et
• en position andain, transversalement à ladite direction d'avance (9) et à une certaine distance au-dessus du sol (S) .
- une structure d'attelage (2) destinée à être liée au dispositif d'attelage (6) d'un véhicule moteur (7) ;
- une poutre porteuse (3) liée d'une part à la structure d'attelage (2) au moyen d'une première articulation (10) et d'autre part au mécanisme de coupe (4) au moyen d'une deuxième articulation (11);
- un dispositif de manoeuvre (5) permettant d'amener le mécanisme de coupe (4) au moins en position de travail et en position andain et comportant :
• un organe de manoeuvre (25) lié entre autres au mécanisme de coupe (4) et comprenant un premier levier (27) lié audit mécanisme de coupe (4) au moyen d'une troisième articulation (29), et un verrou (56) destiné à stopper lors de la mise en position andain, le pivotement du mécanisme de coupe, vers le haut, autour de l'axe longitudinal (11a) de la deuxième articulation (11); et
• un élément de manoeuvre (26) lié à l'une de ses extrémités (30, 31) audit organe de manoeuvre (25) au moyen d'une quatrième articulation (32) et à l'autre de ses extrémités (30, 31), à la structure d'attelage (2) au moyen d'une cinquième articulation (33) ;
***caractérisée en ce*** que l'organe de manoeuvre (25) comporte en sus un deuxième levier (35) lié d'une part à la poutre porteuse (3) au moyen d'une sixième articulation (36) et d'autre part au premier levier (27) au moyen d'une septième articulation (37).

2. Faucheuse selon la revendication 1, ***caractérisée en ce*** que lesdites articulations (10, 11, 29, 32, 33, 36, 37) présentent un axe respectif (10a, 11a, 29a, 32a, 33a, 36a, 37a) dirigé vers l'avant, de préférence sensiblement suivant la direction d'avance (9) au travail.

3. Faucheuse selon la revendication 1 ou 2, ***caractérisée en ce*** que en position de travail normal, (mécanisme de coupe (4) au moins sensiblement horizontal), la septième articulation (37) liant le deuxième levier (35) au premier levier (27) est située plus haut que la deuxième articulation (11) liant la poutre porteuse (3) au mécanisme de coupe (4).

4. Faucheuse selon la revendication 3, ***caractérisée en ce*** que en position de travail normal, et en vue suivant l'axe longitudinal (11a) de la deuxième articulation (11) liant la poutre porteuse (3) au mécanisme de coupe (4), la septième articulation (37) liant le deuxième levier (35) au premier levier (27) est située entre ladite deuxième articulation (11) et la troisième articulation (29) liant le premier levier (27) au mécanisme de coupe (4).

5. Faucheuse selon la revendication 3 ou 4, ***caractérisée en ce*** que en vue suivant l'axe longitudinal (11a) de la deuxième articulation (11) liant la poutre porteuse (3) au mécanisme de coupe (4), la septième articulation (37) liant le deuxième levier (35) au premier levier (27) est sensiblement confondu avec la quatrième articulation (32) liant l'élément de manoeuvre (26) à l'organe de manoeuvre (25).

6. Faucheuse selon l'une quelconque des revendications 1 à 5, ***caractérisée en ce*** que la troisième articulation (29) liant le premier levier (27) au mécanisme de coupe (4) est située au-dessus du plan horizontal (47) contenant l'axe longitudinal (11a) de la deuxième articulation (11) liant la poutre porteuse (3) au mécanisme de coupe (4), tandis que la sixième articulation (36) liant le deuxième levier (35) à la poutre porteuse (3) est située en dessous dudit plan horizontal (47).

7. Faucheuse selon l'une quelconque des revendications 1 à 6, ***caractérisée en ce*** que la sixième articulation (36) liant le deuxième levier (35) à la poutre porteuse (3) est située du même côté du deuxième plan vertical (48) contenant l'axe longitudinal (11a) de la deuxième articulation (11) liant la poutre porteuse (3) au mécanisme de coupe (4) que la structure d'attelage (2), tandis que la troisième articulation (29) liant le premier levier (27) au mécanisme de coupe (4) est située de l'autre côté dudit deuxième plan vertical (48).

8. Faucheuse selon l'une quelconque des revendications 1 à 7, ***caractérisée en ce*** que le verrou (56) est destiné à venir en appui sur une butée (57) prévue sur la poutre porteuse (3).

9. Faucheuse selon la revendication 8, ***caractérisée en ce*** que en position de travail normal, le verrou (56) est en contact avec la butée (57) ou s'étend du moins dans le voisinage de celle-ci.

10. Faucheuse selon la revendication 8 ou 9, ***caractérisée en ce*** que le mécanisme de coupe (4) est, en vue du transport, pivoté vers le haut autour de l'axe longitudinal (11a) de la deuxième articulation (11) jusque dans une position sensiblement verticale ou au-delà, et en ce que le verrou (56) et/ou la butée (57) sont escamotables pour autoriser ledit pivotement.

11. Faucheuse selon la revendication 10, ***caractérisée en ce que*** le verrou (56) est prévu escamotable, et en ce que la neutralisation de celui-ci est réalisable à l'aide d'un dispositif de commande à distance (65).

12. Faucheuse selon l'une quelconque des revendications 1 à 11, ***caractérisée en ce*** que le verrou (56) est constitué par un troisième levier (58) lié au deuxième levier (35) au moyen d'une huitième articulation (59).

13. Faucheuse selon la revendication 12, ***caractérisée en ce*** que la huitième articulation (59) liant le troisième levier (58) au deuxième levier (35) présente un axe (59a) dirigé vers l'avant, de préférence sensiblement suivant la direction d'avance (9) au travail.

14. Faucheuse selon l'une quelconque des revendications 1 à 13, ***caractérisée en ce*** qu'il est prévu un moyen permettant, en position de travail, au mécanisme de coupe (4) de se déplacer librement autour de l'axe longitudinal (11a) de la deuxième articulation (11) liant la poutre porteuse (3) audit mécanisme de coupe (4).

15. Faucheuse selon la revendication 14, ***caractérisée en ce*** que ledit moyen est constitué d'un trou oblong (44) réalisé longitudinalement dans le premier levier (27) dans lequel peut coulisser librement la quatrième articulation (32) liant l'élément de manoeuvre (26) audit premier levier (27).

16. Faucheuse selon l'une quelconque des revendications 1 à 15, ***caractérisée en ce*** qu'en position de travail, l'élément de manoeuvre (26) permet à l'organe de manoeuvre de se déplacer librement pour suivre les déplacements du mécanisme de coupe (4).

## Claims

1. Mower comprising:
- a cutting mechanism (4) extending:
• in the work position, transversely to the direction of forward travel (9) and at ground (S) level, and
• in the windrowing position, transversely to the said direction of forward travel (9) and a certain distance above the ground (S).
- a hitching structure (2) intended to be connected to the hitching device (6) of a motor vehicle (7);
- a carrying beam (6) connected, on the one hand, to the hitching structure (2) by means of a first articulation (10) and, on the other hand, to the cutting mechanism (4) by means of a second articulation (11);
- an operating device (5) allowing the cutting mechanism (4) to be brought at least into the work position and into the windrowing position and comprising:
• an operating member (25) connected, amongst other things, to the cutting mechanism (4) and comprising a first lever (27) connected to the said cutting mechanism (4) by means of a third articulation (29), and a latch (56) intended to stop the upward pivoting of the cutting mechanism about the longitudinal axis (11a) of the second articulation (11) when bringing into the windrowing position; and
• an operating element (26) connected, at one of its ends (30, 31), to the said operating member (25) by means of a fourth articulation (32) and, at the other of its ends (30, 31), to the hitching structure (2) by means of a fifth articulation (33);
***characterized in*** that the operating member (25) additionally comprises a second lever (35) connected, on the one hand, to the carrying beam (3) by means of a sixth articulation (36) and, on the other hand, to the first lever (27) by means of a seventh articulation (37).

2. Mower according to Claim 1, ***characterized in*** that the said articulations (10, 11, 29, 32, 33, 36, 37) have a respective axis (10a, 11a, 29a, 32a, 33a, 36a, 37a) directed forwards, preferably substantially in the direction of forward travel (9) during work.

3. Mower according to Claim 1 or 2, ***characterized in*** that in the normal work position (with the cutting mechanism (4) at least substantially horizontal), the seventh articulation (37) connecting the second lever (35) to the first lever (27) is located higher up than the second articulation (11) connecting the carrying beam (3) to the cutting mechanism (4).

4. Mower according to Claim 3, ***characterized in*** that in the normal work position, and viewed along the longitudinal axis (11a) of the second articulation (11) connecting the carrying beam (3) to the cutting mechanism (4), the seventh articulation (37) connecting the second lever (35) to the first lever (27) is located between the said second articulation (11) and the third articulation (29) connecting the first lever (27) to the cutting mechanism (4).

5. Mower according to Claim 3 or 4, ***characterized in*** that, viewed along the longitudinal axis (11a) of the second articulation (11) connecting the carrying beam (3) to the cutting mechanism (4), the seventh articulation (37) connecting the second lever (35) to the first lever (27) is substantially coincident with the fourth articulation (32) connecting the operating element (26) to the operating member (25).

6. Mower according to any one of Claims 1 to 5, ***characterized in*** that the third articulation (29) connecting the first lever (27) to the cutting mechanism (4) is located above the horizontal plane (47) containing the longitudinal axis (11a) of the second articulation (11) connecting the carrying beam (3) to the cutting mechanism (4), whereas the sixth articulation (36) connecting the second lever (35) to the carrying beam (3) is located below the said horizontal plane (47).

7. Mower according to any one of Claims 1 to 6, ***characterized in*** that the sixth articulation (36) connecting the second lever (35) to the carrying beam (3) is located on the same side of the second vertical plane (48) containing the longitudinal axis (11a) of the second articulation (11) connecting the carrying beam (3) to the cutting mechanism (4) as the hitching structure (2), whereas the third articulation (29) connecting the first lever (27) to the cutting mechanism (4) is located on the other side of the said second vertical plane (48).

8. Mower according to any one of Claims 1 to 7, ***characterized in*** that the latch (56) is intended to come to rest on a stop (57) provided on the carrying beam (3).

9. Mower according to Claim 8, ***characterized in*** that in the normal work position, the latch (56) is in contact with the stop (57) or at least extends into the vicinity thereof.

10. Mower according to Claim 8 or 9, ***characterized in*** that the cutting mechanism (4) is, with a view to transport, pivoted upwards about the longitudinal axis (11a) of the second articulation (11) into a substantially vertical position or beyond this, and in that the latch (56) and/or the stop (57) can be retracted to allow the said pivoting.

11. Mower according to Claim 10, ***characterized in*** that the latch (56) is designed to be retractable and in that its effect can be cancelled using a remote-control device (65).

12. Mower according to any one of Claims 1 to 11, ***characterized in*** that the latch (56) consists of a third lever (58) connected to the second lever (35) by means of an eighth articulation (59).

13. Mower according to Claim 12, ***characterized in*** that the eighth articulation (59) connecting the third lever (58) to the second lever (35) has an axis (59a) directed forwards, preferably substantially in the direction of forward travel (9) during work.

14. Mower according to any one of Claims 1 to 13, ***characterized in*** that there is a means provided which, in the work position, allows the cutting mechanism (4) to move freely about the longitudinal axis (11a) of the second articulation (11) connecting the carrying beam (3) to the said cutting mechanism (4).

15. Mower according to Claim 14, ***characterized in*** that the said means consists of an oblong hole (44), in which the fourth articulation (32) connecting the operating element (26) to the said first lever (27) can slide freely, made longitudinally in the first lever (27).

16. Mower according to any one of Claims 1 to 15, ***characterized in*** that, in the work position, the operating element (26) allows the operating member to move freely to follow the movements of the cutting mechanism (4).

## Patentansprüche

1. Mähmaschine, mit
- einem Schneidmechanismus (4), der sich
• in Arbeitsstellung quer zur Vorschubrichtung (9) und in Höhe des Bodens (S) und
• in Schwadstellung quer zu der Vorschubrichtung (9) und in einem bestimmten Abstand über dem Boden (S) erstreckt,
- einer Kupplungseinrichtung (2) zur Verbindung mit der Kupplungsvorrichtung (6) eines Motorfahrzeugs (7);
- einem Stützträger (3), der einerseits mittels eines ersten Gelenks (10) mit der Kupplungseinrichtung (2) und andererseits mittels eines zweiten Gelenks (11) mit dem Schneidmechanismus (4) verbunden ist;
- einer Betätigungsvorrichtung (5), die es gestattet, den Schneidmechanismus (4) zumindest in Arbeitsstellung und in Schwadstellung zu bringen und
• ein Betätigungsglied (25), das unter anderem mit dem Schneidmechanismus (4) verbunden ist und einen mittels eines dritten Gelenks (29) mit dem Schneidmechanismus (4) verbundenen ersten Hebel (27) und einen Riegel (56), der bei der Anordnung in Schwadstellung das Nachobenschwenken des Schneidmechanismus um die Längsachse (11a) des zweiten Gelenks (11) anhalten soll, umfaßt; und
• ein Betätigungselement (26), das mit einem seiner Enden (30, 31) mittels eines vierten Gelenks (32) mit dem Betätigungsglied (25) und mit dem anderen seiner Enden (30, 31) mittels eines fünften Gelenks (33) mit der Kupplungseinrichtung (2) verbunden ist, enthält;
***dadurch gekennzeichnet,*** daß das Betätigungsglied (25) des weiteren einen zweiten Hebel (35) aufweist, der einerseits mittels eines sechsten Gelenks (36) mit dem Stützträger (3) und andererseits mittels eines siebten Gelenks (37) mit dem ersten Hebel (27) verbunden ist.

2. Mähmaschine nach Anspruch 1, ***dadurch gekennzeichnet***, daß die Gelenke (10, 11, 29, 32, 33, 36, 37) eine jeweilige Achse (10a, 11a, 29a, 32a, 33a, 36a, 37a) aufweisen, die - vorzugsweise im wesentlichen in Arbeitsvorschubrichtung (9) - nach vorne ausgerichtet ist.

3. Mähmaschine nach Anspruch 1 oder 2, ***dadurch gekennzeichnet,*** daß das den zweiten Hebel (35) mit dem ersten Hebel (27) verbindende siebte Gelenk (37) in normaler Arbeitsstellung (Schneidmechanismus (4) zumindest im wesentlichen horizontal) höher angeordnet ist als das den Stützträger (3) mit dem Schneidmechanismus (4) verbindende zweite Gelenk (11).

4. Mähmaschine nach Anspruch 3, ***dadurch gekennzeichnet,*** daß das den zweiten Hebel (35) mit dem ersten Hebel (27) verbindende siebte Gelenk (37) in normaler Arbeitsstellung, und entlang der Längsachse (11a) des den Stützträger (3) mit dem Schneidmechanismus (4) verbindenden zweiten Gelenks (11) betrachtet, zwischen dem zweiten Gelenk (11) und dem den ersten Hebel (27) mit dem Schneidmechanismus (4) verbindenden dritten Gelenk (29) angeordnet ist.

5. Mähmaschine nach Anspruch 3 oder 4, ***dadurch gekennzeichnet,*** daß das den zweiten Hebel (35) mit dem ersten Hebel (27) verbindende siebte Gelenk (37), entlang der Längsachse (11a) des den Stützträger (3) mit dem Schneidmechanismus (4) verbindenden zweiten Gelenks (11) betrachtet, im wesentlichen mit dem das Betätigungselement (26) mit dem Betätigungsglied (25) verbindenden vierten Gelenk (32) zusammenfällt.

6. Mähmaschine nach irgend einem der Ansprüche 1 bis 5, ***dadurch gekennzeichnet,*** daß das den ersten Hebel (27) mit dem Schneidmechanismus (4) verbindende dritte Gelenk (29) über der horizontalen Ebene (47) angeordnet ist, die die Längsachse (11a) des den Stützträger (3) mit dem Schneidmechanismus (4) verbindenden zweiten Gelenks (11) enthält, wahrend das den zweiten Hebel (35) mit dem Stützträger (3) verbindende sechste Gelenk (36) unter der horizontalen Ebene (47) angeordnet ist.

7. Mähmaschine nach irgend einem der Ansprüche 1 bis 6, ***dadurch gekennzeichnet,*** daß das den zweiten Hebel (35) mit dem Stützträger (3) verbindende sechste Gelenk (36) auf der gleichen Seite der zweiten vertikalen Ebene (48), die die Längsachse (11a) des den Stützträger (3) mit dem Schneidmechanismus (4) verbindenden zweiten Gelenks (11) enthält, wie die Kupplungseinrichtung (2) angeordnet ist, während das den ersten Hebel (27) mit dem Schneidmechanismus (4) verbindende dritte Gelenk (29) auf der anderen Seite der zweiten vertikalen Ebene (48) angeordnet ist.

8. Mähmaschine nach irgend einem der Ansprüche 1 bis *7,* ***dadurch gekennzeichnet,*** daß der Riegel (56) an einem am Stützträger (3) vorgesehenen Anschlag (57) zur Anlage kommen soll.

9. Mähmaschine nach Anspruch 8, ***dadurch gekennzeichnet,*** daß der Riegel (56) - in normaler Arbeitsstellung - den Anschlag (57) berührt oder sich zumindest in dessen Nähe erstreckt.

10. Mähmaschine nach Anspruch 8 oder 9, ***dadurch gekennzeichnet,*** daß der Schneidmechanismus (4) im Hinblick auf den Transport um die Längsachse (11a) des zweiten Gelenks (11) nach oben bis in eine im wesentlichen vertikale Stellung oder darüber hinaus geschwenkt ist und daß der Riegel (56) und/oder der Anschlag (57) klappbar sind, um das Schwenken zu gestatten.

11. Mähmaschine nach Anspruch 10, ***dadurch gekennzeichnet,*** daß der Riegel (56) klappbar vorgesehen ist und daß er mittels einer Fernsteuervorrichtung (65) außer Kraft gesetzt werden kann.

12. Mähmaschine nach irgend einem der Ansprüche 1 bis 11, ***dadurch gekennzeichnet,*** daß der Riegel (56) aus einem mittels eines achten Gelenks (59) mit dem zweiten Hebel (35) verbundenen dritten Hebel (58) besteht.

13. Mähmaschine nach Anspruch 12, ***dadurch gekennzeichnet,*** daß das den dritten Hebel (58) mit dem zweiten Hebel (35) verbindende achte Gelenk (59) eine - vorzugsweise im wesentlichen in Arbeitsvorschubrichtung (9) - nach vorne ausgerichtete Achse (59a) aufweist.

14. Mähmaschine nach irgend einem der Ansprüche 1 bis 13, ***dadurch gekennzeichnet,*** daß ein Mittel vorgesehen ist, das es in Arbeitsstellung dem Schneidmechanismus (4) gestattet, sich frei um die Längsachse (11a) des den Stützträger (3) mit dem Schneidmechanismus (4) verbindenden zweiten Gelenks (11) zu bewegen.

15. Mähmaschine nach Anspruch 14, ***dadurch gekennzeichnet,*** daß das Mittel aus einem Langloch (44) besteht, das in Längsrichtung im ersten Hebel (27) ausgebildet ist, in dem das das Betätigungselement (26) mit dem ersten Hebel (27) verbindende vierte Gelenk (32) frei gleiten kann.

16. Mähmaschine nach irgend einem der Ansprüche 1 bis 15, ***dadurch gekennzeichnet,*** daß das Betätigungselement (26) in Arbeitsstellung es dem Betätigungsglied gestattet, sich frei zu bewegen, um den Bewegungen des Schneidmechanismus (4) zu folgen.
